# EUROPEAN PATENT SPECIFICATION

(11) **EP 2 532 113 B1**
(45) Date of publication and mention of the grant of the patent: **04.12.2013**
(21) Application number: 11703371.2
(22) Date of filing: 01.02.2011
(51) Int. Cl.: H04L 7/00, H04J 14/08, H04J 3/06

(54) **DATA PACKET SYNCHRONIZATION AND RETURN-TO-ZERO CONVERSION**
DATENPAKETSYNCHRONISIERUNG UND RÜCKKEHR-ZU-NULL-KONVERTIERUNG
SYNCHRONISATION DE PAQUETS DE DONNÉES ET CONVERSION DE RETOUR À ZÉRO

(30) Priority: 01.02.2010 US 300126 P; 01.02.2010 EP 10152266
(43) Date of publication of application: 12.12.2012
(73) Proprietor: Danmarks Tekniske Universitet, 2800 Lyngby (DK)
(72) Inventor: OXENLØWE, Leif Katsuo, DK-3400 Hillerød (DK); GALILI, Michael, DK-4000 Roskilde (DK); CLAUSEN, Anders Thomas, DK-2600 Glostrup (DK)
(74) Representative: Plougmann & Vingtoft A/S
(86) International application number: PCT/DK2011/050025
(87) International publication number: WO 2011/091802

(56) References cited:
- EP-A1- 1 819 070
- EP-A1- 2 034 634
- EP-A2- 1 363 420
- SATOKI KAWANISHI: "Ultrahigh-Speed Optical Time-Division-Multiplexed Transmission Technology Based on Optical Signal Processing", IEEE JOURNAL OF QUANTUM ELECTRONICS, IEEE SERVICE CENTER, PISCATAWAY, NJ, USA, vol. 34, no. 11, 1 November 1998 (1998-11-01), XP011052078, ISSN: 0018-9197

## Description

### Background of the invention

Throughout the Information age, from the 1990's till present day, the worldwide focus on increasing capacity in communication networks has only grown. What spurs this on is the continuous growth in the Internet traffic with more web-applications becoming part of our daily lives. More people get a fibre to the home (FTTH), which paves the way for increased use of bandwidth-heavy content, such as iTunes, YouTube, MySpace, social platforms like Facebook, and video services on the Internet, including video-on-demand and HDTV broadcasting. A conservative estimate today is that the Internet traffic is going to double every 2 years, and that each currently installed fiber pair in the Atlantic region will need to provide 40-Tbit/s capacity by the year 2015. The projected capacity demands together with current upgrades of deployed networks indicate that there is also a need for more efficient and intelligent communication networks based on optical technologies and optical/electrical interfaces. Alongside the efforts to increase the traffic capacity is an increasing focus on doing this while reducing also power consumption. This is motivated by the increasing environmental awareness of the footprint left by the telecommunication industry. In Japan, for instance, the power needed to keep the Internet running is approaching some 10% of the national total electrical power consumption. In Internet exchange stations, there is an abundance of equipment that produces so much heat that active cooling is required, which requires further energy use.

Electronic routers used to switch traffic from one path to another in network nodes are currently among the most power-consuming devices in today's telecommunication systems. It is projected, for instance, that these will consume 9% of the electric power in Japan by 2015 unless there is a paradigm shift in data signal switching technologies.

There are many indications that components operating primarily based on optical signals rather than electrical signals may reduce the power consumption significantly. In October 2007 at a Nature Photonics Conference, it was concluded that "the answer to the problem lies with a move to all-optical switching and routing technologies that should be far more compact, consume less power and potentially be easier to upgrade to higher data rates owing to their transparent nature".

In serial communications, fewer components will in general be used, and with ultra-short pulses very high bit rates may become available. Historically, increases in serial data rates have lead to cost savings, due to reduced complexity in management, reduced power consumption and a reduced number of components.

There is currently a strong trend towards transitioning the Ethernet standard, traditionally used for computer communications, to also be used in network protocols of future telecommunication systems. In an Ethernet network, the data bits are arranged serially in data packets of certain lengths and each packet has an address tag. Today, there are considerable efforts to push the standard from 10 Gbit/s Ethernet ("GE") to 100 GE by multiplexing electrical signals in the time domain (electrical time division multiplexing, ETDM). In 5-10 years from now, it might then be expected that Internet routers and Internet exchange stations have several 100 GE lines that need to be transmitted to the same destination, and to avoid congestion in Internet exchange stations it may be necessary to employ an optical Ethernet multiplexing scheme. This could result in an optical 1000 GE, or 1 Terabit/s Ethernet (TE). The 1 TE must be optical (i.e. optical time division multiplexing, OTDM), as there are no signs that electronics will be able to provide these speeds in any foreseeable future, and certainly not so at reasonable power levels.

A great concern with the technologies developed so far is their massive power consumption. Using optical and high-speed serial data transmission technologies, and designing optical networks which rely on optically switchable data paths (circuit switching) rather than on electronic packet switching can reduce the power consumption enormously: A commercial router using 4 wavelengths with 40 Gbit/s ETDM rates uses megawatts of power, whereas an OTDM based 160 Gbit/s circuit switched router uses only about 20 W. Furthermore, 100 Gbit/s ETDM is still a research laboratory state-of-the-art, and there has only been a single basic back-to-back demonstration above 100 Gbit/s, namely an ETDM signal at 160 Gbit/s. In contrast, there have been several full 160 Gbit/s transmission system demonstrations since before 1999 using OTDM. And while ETDM does not appear able to go beyond 160 Gbit/s at present, OTDM does not have any obvious limits. By adding 4 data levels on the phase of each pulse and including polarisation, a data rate of 2.56 Tbit/s on one wavelength has been achieved. Recently, a breakthrough linked the research fields of OTDM with coherent communications, and it was shown that coherent receiver technology could be used for serial data at 640 Gbit/s (4 phase levels and polarisation multiplexing on 160 Gbaud pulse train). Coherent receiver technology offers very good transmission impairment tolerance because it detects the electric field of the data signal and can determine the phase directly and subsequently filter away, to a large extent, causal influences on data quality through digital signal processing.

If 100 GE is to evolve into the next "natural" generation, 1000 GHz pulse trains will thus be needed. It is challenging to generate and handle such short pulses, having pulse widths on the order of 400 fs or less, and having a very low time jitter (~50 fs). To process very short pulses, one can benefit tremendously from optimising the temporal shape of the optical pulses used in the signal processing. Particularly, pulses with temporally flat tops have been seen to be able to greatly improve the performance of optical switches. With the appropriate dimensions, a flat-top pulse could allow for very uniform switching of optical data pulses in a fast optical switch.

Other systems and methods are described in the below documents.
EP 2 034 634, which discloses a system comprising an O/E conversion element converting an input NRZ optical signal into an electric signal. A clock recovery circuit recovers a clock signal from the electric signal obtained by the O/E conversion element. That is, the data is not synchronised to a local master clock. A phase modulator applies phase modulation to the NRZ optical signal, using the recovered clock signal. An intensity modulator applies intensity modulation to the NRZ optical signal, using the recovered clock signal. A dispersion medium compensates for a frequency chirp of an optical signal output from the intensity modulator. As a result, the pulse width of the NRZ optical signal is compressed, and the NRZ optical signal is converted into an RZ optical signal.

Satoki Kawanishi, 'Ultrahigh-speed optical time-division-multiplexed transmission technology based on optical signal processing, IEEE journal of quantum electronics, vol. 34, no. 11, 1. November 1998.

EP 1 363 420 which discloses an optical modulation/multiplexing circuit that can fabricate a plurality of nonlinear optical waveguide devices and silica optical waveguides through a small number of processes, and achieve the simplification of the fabrication process and stabilization of the operation by hybrid integration with reduced connection loss. It employs lithium niobate domain inversion optical waveguides as nonlinear optical switches, and implements functions necessary for modulation and multiplexing such as input, splitting, multiplexing and timing adjustment of optical modulation signals and an optical clock signal by connecting glass waveguides to the input and output terminals of the domain inversion optical waveguides.

EP 1 819 070 which discloses a clock recovery circuit for a digital signal comprising a clock signal and a high-frequency jitter component due to polarisation scrambling in the optical domain.

### Summary of the invention

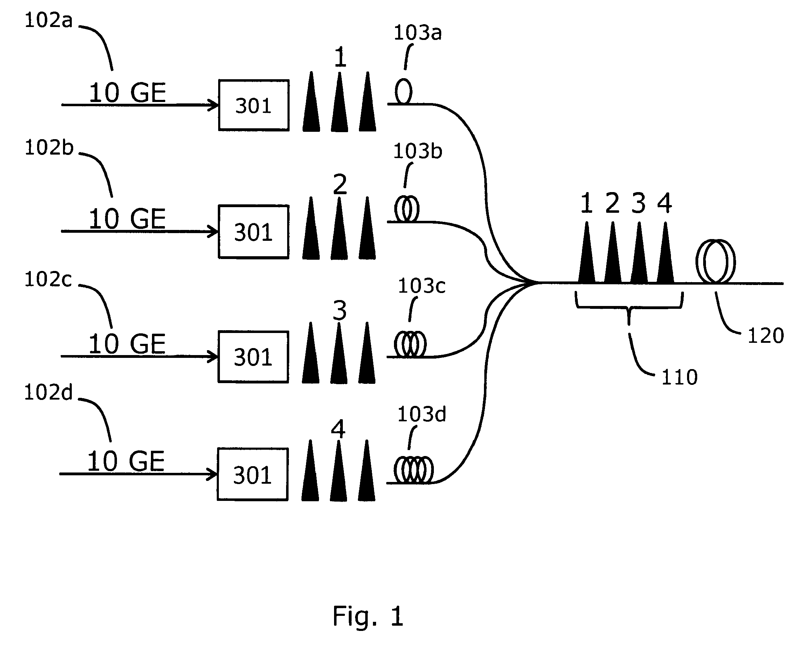

It is expected that coming 1 Tbit/s network topologies may well be based, at least partly, on Ethernet frames. Figure 1 illustrates a rather general structure of a 1 Tbit/s Ethernet transmission system envisioned by the inventors. It includes an interface between existing Ethernet infrastructure, illustrated by Ethernet communication lines with data packet signals 102a-102d (such as 10 GE lines), and OTDM infrastructure, illustrated by delay lines 103a-103d, OTDM signal 110 and transmission fiber 120. The Gigabit Ethernet data signals are combined to generate a single signal 110, which can then act as a high capacity carrier in the network. The 10 GE packets might have been obtained directly or by aggregating 1 GE data packets by standard FIFO (first-in-first-out) aggregation.

As OTDM keeps the data on a single serial string at the same wavelength, it inherently lends itself conveniently to various types or degrees of format conversion. It has often been stated as being a benefit of OTDM that the single-wavelength nature makes it easy to perform e.g. wavelength conversion or regeneration in a single step, something which is not possible with parallel channels, separated in fibers or by wavelength.

A packet-based OTDM ring network could benefit from the present invention. Such a system would require synchronization of packets sent from one node and received by another. It is not necessarily possible to synchronize a master clock at the sending node with a master clock at the receiving node. Two master clocks will, however, have almost the same oscillation frequency, which is a feature that will allow the present invention to work in networks in which node equipment may originate from different manufactures that use slightly different technologies in their equipment, leading for instance to an difference between clocks in different nodes.

Ethernet packets can have varying lengths and bit rates (repetition frequencies). To enable the conversion from Ethernet packet signal to OTDM signals, the inventors have invented, in a first aspect, a method for synchronizing an incoming data packet signal, such as an Ethernet data packet signal, to a clock signal having a clock signal oscillation frequency, the incoming data packet signal having a first bitrate. The method comprises:
- splitting the incoming data packet signal into a first part and a second part;
- obtaining an offset frequency signal representing an offset between a bitrate of the second part of the incoming data packet signal and the oscillation frequency of the clock signal;
- providing a synchronized data packet signal having a bitrate matching the clock signal oscillation frequency by stretching or compressing the first part of the incoming data packet signal based on the obtained offset frequency signal.

The incoming data packet signal is an optical signal, and the signal is split optically in a first part and a second part. The clock signal is a local master clock signal having a clock signal oscillation frequency to which the data packet signal is synchronised. The clock signal is thus not recovered from the data packet signal for synchronisation purposes, but the data packet is synchronised to the local clock. This allows for numerous incoming asynchronous data packets all being locked to the sa,e local master clock frequency.

In the following, a number of further aspects, preferred and/or optional features, elements, examples and implementations will be summarized. Features or elements described in relation to one embodiment or aspect may be combined with or applied to the other embodiments or aspects where applicable. For example, structural and functional features applied in relation to a method may also be used as features in relation to the synchronizer or converter and vice versa. Also, explanations of underlying mechanisms of the invention as realized by the inventors are presented for explanatory purposes, and should not be used in ex post facto analysis for deducing the invention.

An issue with Ethernet packets is that they may very well have a slight offset in their repetition frequency from a nominal frequency. The frequency of a 10 GE packet signal is thus not necessarily 10 GHz, but rather 10 GHz +Δ*f*, where Δ*f* is the offset frequency. The incoming data packet signal is split into a first part and a second part, each of which will, unless any processing is performed on them, have the same bitrate as the incoming packet data signal.

The offset frequency signal is provided to a system that can stretch or compress the incoming data packet signal based on the offset frequency signal. The incoming data packet signal is stretched or compressed into a synchronized data packet signal, which is a data packet signal that represents the incoming data packet signal, but is synchronized with the clock signal. Such a system is in some cases appropriately referred to as an *optical time lens.* The optical time lens functionality can be provided by feeding the offset frequency signal to a field programmable gate array (FPGA) which then controls a modulator, such as a Lithium Niobate modulator, to modify the phase across the signal, in this case the incoming data packet signal.

As opposed to prior art, the time lens in the present invention can stretch or compress a full data packet waveform until the temporal separation between adjacent bits in the packet matches the period of the clock signal. The applied phase modulation is therefore applied to the full packet. A packet envelope detector can determine the waveform extent (i.e. the full packet length) and this information be fed to the FPGA to make the FPGA apply the modulation across the packet. In many situations, a parabolic phase-shape is advantageous for application to the full packet to stretch or compress it.

Other systems for stretching or compressing signals may go under terms other than "optical time lens". This term is just useful for capturing the functionality that is required.

The stretching or compressing required to obtain a synchronized data packet signal having a bitrate matching the clock signal oscillation frequency can thus advantageously include the following steps:
- determining a temporal duration of an incoming data packet represented by the second part of the incoming data packet signal;
- applying, during said temporal duration, a phase modulation to the corresponding first part of the incoming data packet signal representing the incoming data packet to cause said stretching or compression, the applied phase modulation being based on the obtained offset frequency signal.

This is a new use of the optical time lens which, once this method has been provided by the present invention, can be used by a person of average skill in the art to set up a system for stretching/compressing the full packet .

A second aspect of the invention provides a method for converting an incoming data packet signal into a synchronized return-to-zero signal. The method comprises the steps of the first aspect method to provide a synchronized data packet signal based on the incoming data packet signal. The method further comprises:
- providing an optical pulse train comprising light pulses at a pulse rate corresponding to the oscillation frequency of the clock signal; the pulse train preferably being return-to-zero, and the pulses preferably having a duration that is shorter than data pulses in the synchronized data packet signal, such as a duration shorter than 1 ps, preferably shorter than 500 fs;
- sampling data pulses of the synchronized data packet signal using the optical pulse train, thereby obtaining the synchronized return-to-zero signal.

The result of the sampling is the synchronized return-to-zero signal. In this way, a (non-return-to-zero) data packet, represented by (at least a part of) the incoming data packet signal, has been converted into a return-to-zero signal, in principle ready for transmission over an optical fiber.

The sampling may be obtained by letting the bits in the data packet signal open a gate for the narrow clock pulses, using e.g. a non-linear optical loop mirror (NOLM), a Kerr switch, or four wave mixing.

A third aspect of the invention provides a method for preparing one or more incoming line data packet signals for transmission as a time-division multiplexed return-to-zero signal. The method comprises:
- converting each of the one or more incoming line data packet signals in accordance with the second aspect to provide corresponding one or more synchronized return-to-zero signals;
- time division multiplexing the one or more synchronized return-to-zero signals, thereby providing the time division multiplexed return-to-zero signal.

These resulting time division multiplexed return-to-zero signal lends itself to further transmission, for instance in local area networks, building-to-building networks or networks connecting servers and/or connecting servers to internet exchange stations. If there is only one incoming data packet signal, the time division multiplexing does nothing material to the return-to-zero signal.

The time-division multiplexing might advantageously be performed on a stable integrated planar lightwave circuit with fixed accurate delays.

The method enables transmission of multiple data packets lines, such as Ethernet lines, as a single OTDM signal. This design for synchronisation and multiplexing prevents traffic congestion, as each incoming line is guaranteed a time slot into which it can be multiplexed.

At a receiver end, demultiplexing the OTDM signal readily provides the synchronised 10 GE Ethernet data packet signals.

The converting of the lines is performed with reference to a single master clock signal, although different clocks could be used for different lines, if necessary. This will require further processing when multiplexing the lines.

A fourth aspect of the invention provides a synchronizer for synchronizing an incoming data packet signal to a clock signal having a clock signal oscillation frequency, the incoming data packet signal having a first bitrate. The synchronizer comprises:
- a clock signal generator for generating the clock signal;
- an input port for receiving the incoming data packet signal to be converted;
- preferably a splitter for splitting the received incoming data packet signal into a first part and a second part, this splitting may also take place outside the synchronizer;
- offset frequency determining means for obtaining an offset frequency signal representing an offset between a bitrate of the second part of the incoming data packet signal and the oscillation frequency of the clock signal;
- a phase modulator for providing a synchronized data packet signal having a bitrate matching the clock signal oscillation frequency, the phase modulator stretching or compressing the first part of the incoming data packet signal based on the obtained offset frequency signal.

The splitter for splitting the received incoming data packet signal into a first part and a second part is preferably an optical splitter splitting the signal optically.

A fifth aspect of the invention provides a converter for converting an incoming data packet signal into a synchronized return-to-zero signal. Such a converter comprises a synchronizer in accordance with the fourth aspect of the invention, and further comprises:
- a pulse source for providing an optical pulse train as described in relation to the second aspect, and with a pulse rate corresponding to the oscillation frequency of the clock signal;
- an optical sampler for sampling data pulses of the synchronized data packet signal using the optical pulse train, thereby providing the synchronized return-to-zero signal.

It is common for all aspects of the present invention that the incoming data packet signal is an optical signal, and the signal is split optically in a first part and a second part. Furthermore, the clock signal is a local master clock signal having a clock signal oscillation frequency to which the data packet signal is synchronised. The clock signal is not recovered from the data packet signal for synchronisation purposes. Therefore the data packet signals, comprising asynchronous data packets, are synchronised to the local master clock.

### Brief description of the drawings

Figure 1 schematically illustrates a combined frame-based network and OTDM network.
Figure 2 illustrates a synchronizer in accordance with the invention, for synchronizing an incoming data packet signal with a clock signal.
Figure 3 illustrates a converter in accordance with the invention, for converting an incoming data packet signal into a return-to-zero signal.
Figure 4 illustrates a synchronization method in accordance with the invention, for synchronizing an incoming data packet signal with a clock signal.
Figure 5 illustrates a conversion method in accordance with the invention, for converting an incoming data packet signal to a return-to-zero signal.
Figure 6 illustrates time-division multiplexing of incoming data packet signals converted with a converter in accordance with the invention.

### Detailed description of selected embodiments

In the following, the invention is described by way of examples, with reference to the figures.

Fig. 1 illustrates a number of incoming 10 Gbit/s Ethernet data packet signals (10 GE) that are turned into short pulses "a", "b", "c", "d". These are multiplexed, using delays 103a-103d, to a 40 Gbit/s OTDM signal 110 for further transmission in local area networks, building-to-building or server-to-server in an internet exchange station over a transmission medium 120.

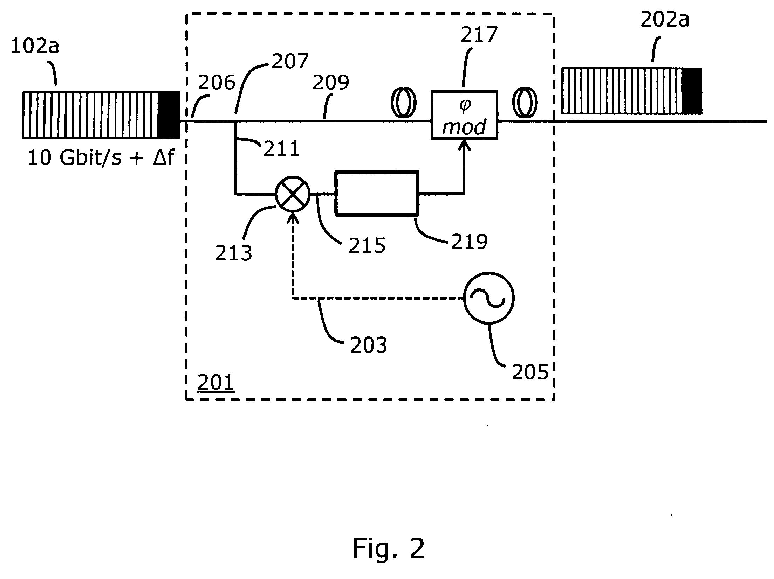

Fig. 2 illustrates a synchronizer 201 in accordance with the invention, for synchronizing an incoming data packet signal to a clock signal 203 provided by a master clock 205. An incoming data packet 102a, represented by a corresponding data packet signal (also referred to as 102a), enters the synchronizer through an input port 206. A splitter 207 splits the data packet signal into a first part 209 and a second part 211, each having identical content (data packet) as the incoming data packet signal, but with lower signal amplitude. The second part of the incoming data packet signal enters offset frequency determining means 213 which is capable of producing an offset frequency signal 215 representing an offset between the bitrate of the second part and the oscillation frequency of the clock signal 203. The offset frequency determining means 213 can be provided by a phase comparator that received the second part of the incoming signal and the clock signal and provides an offset frequency signal which is proportional to the sine or cosine of the phase difference between the two inputs.

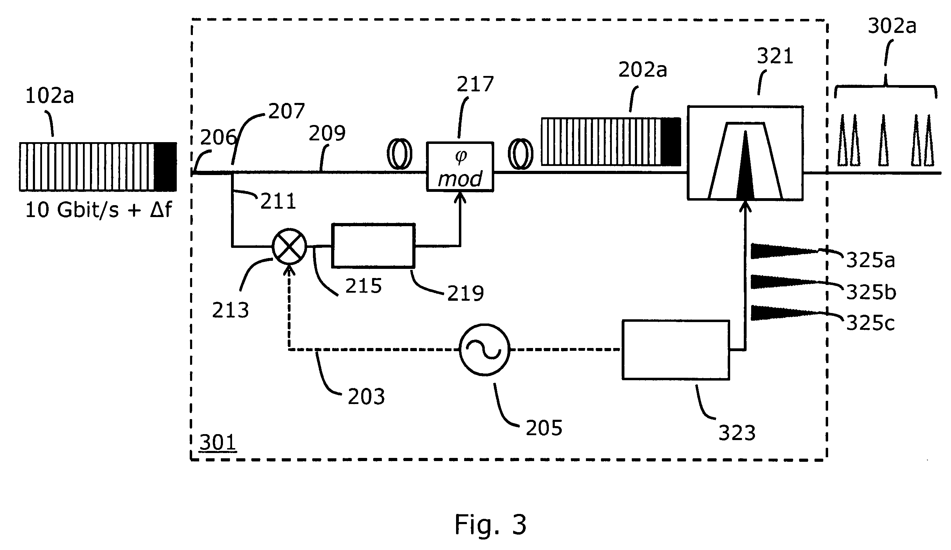

In an alternative embodiment it can be provided by an optical or electrical mixer. In the case of using an electrical mixer, photodetectors are needed in front of the mixer - the mixer then multiplies the now electrical data signal with the local clock signal and lowpass filters the output. This yields a slowly varying signal with a sinusoidal dependence on the frequency difference between the clock and the data signal. The optical equivalent could be a demultiplexer-device. In this case, no photodetectors are needed in front of the mixer, if both the clock and the data are optical (the clock would then use the output from the pulse source 323 from figure 3) as input to the mixer. If the clock and data are not synchronised, the clock pulses will scan across the data pulses inside the mixer, with a scanning frequency equal to the frequency difference between the clock and the data. With subsequent photodetection and lowpass-filtering, this signal will reveal the frequency difference.

As schematically illustrated in Fig. 2, the offset frequency signal 215 is fed to a phase modulator 217, that impart a phase modulation that stretches or compresses the data packet signal represented by the first part of the incoming data packet signal so that the bitrate matches the oscillation frequency of the clock signal. This part of the synchronizer can comprise a packet envelope detector (not shown) to determine the waveform of the second part of the incoming signal and a controller 219 for determining and providing a phase modulation signal to the phase modulator 217. The controller can determine the envelope of the data packet signal via the packet envelope detector and, based on the offset frequency signal , cause the phase modulator to stretch or compress the data packet signal to match the temporal separation between adjacent bits in the packet to the period of the clock signal. In a preferred implementation, the controller 219 is a field programmable gate array (FPGA) which receives the waveform and the offset frequency signal, and then controls the phase modulator 217, such as a Lithium Niobate modulator, to modify the phase across the first part of the incoming data packet signal. The applied phase modulation is preferably applied to the full packet. In many situations, a parabolic phase-shape is advantageous for application to the full packet to stretch or compress it.

The packet envelope detector can determine the envelope electrically or optically based on the second part of the incoming data packet signal. At high speeds, a slow photodetector can be used as packet envelope detector, in which case a part of the incoming data packet signal (typically part of the second part) must be provided to the photodetector.

A synchronizer might have two inputs instead of one, whereby the first and the second parts are provided from the outside and the splitter can be avoided. It is, however, practical to include the splitter in the synchronizer because it ensures the correct relationship between the first and second part of the incoming data packet signal, crucial for obtaining the synchronization.

The synchronizer produces the synchronized data packet signal 202a, which has a bitrate that is synchronized with the clock signal frequency. It may often be, that the individual data pulses in the synchronized data packet signal 202a are temporarily too wide to be interleaved with other pulse trains. Therefore, the individual data pulses in the synchronized data packet signal 202a are temporarily compressed in order to provide a fully converted signal. This full conversion, bitrate synchronization followed by pulse compression, takes place in a converter (301) that includes the synchronizer.

Genneraly the incoming data packet signals are synchronised to a local master clock. Advantageoulsy the incoming data packet signals will therefore, after the conversion, have the same frequency as the local clock. All data signals will therefore be synchronous and they may be multiplexed in the timedomain, whereas if there where deviations on the frequencies of the incoming data signals this would not be possible.
Fig. 3 illustrates a converter 301 in accordance with the invention. It comprises the synchronizer illustrated in Fig. 2, and further comprises a pulse source 323 and a sampler 321 for performing the compression. The pulse source is synchronized with the master clock 205 to which also the incoming data packet signal was synchronized as described in relation to Fig. 2. The short pulses 325a-325c are sent to the sampler 321, where they temporarily overlap with much longer data pulses in signal 202a from the optical time lens (represented by phase modulator 217). The short pulses gate the transmission of the sampler, so that only small parts of the longer data pulses are transmitted (or "sampled"), thereby effectively compressing the longer data pulses to have the duration similar to the short pulses 325a-325c, depending on the response time of the sampler. The resulting signal 302a is thereby equivalent to signal 202a in envelope and content, but consisting of short return-to-zero data pulses. In this way, the incoming data packet signal has been synchronized with the master clock and converted to a return-to-zero signal 302a.

In a preferred implementation, the sampler comprises a nonlinear optical medium such as a nonlinear fibre (e.g. a Highly Non-linear Fibre, HNLF), a non-linear compact waveguide (such as a chalcogenide waveguide or a silcon nanowire type of waveguide), or a non-linear crystal (such as a periodically pooled Lithium Niobate, PPLN). In such nonlinear optical media, the short pulses 325a-325c changes the transmissive properties of the media on an ultrafast time scale, with a response time of e.g. ~5 fs, to make a window or gate for the longer data pulses from signal 202a. The short pulses are preferably return-to-zero, but may in principle be a modulation on a CW background with too little intensity to "open the gate" in the non-linear medium. Thereby, only the part of the longer data pulses that overlaps with the gate will be transmitted or sampled, while the rest of the longer data pulse will be blocked by the sampler. The result is a return-to-zero signal 302a consisting of a train of short, such as having a duration shorter than 1 ps or 500 fs, data pulses.

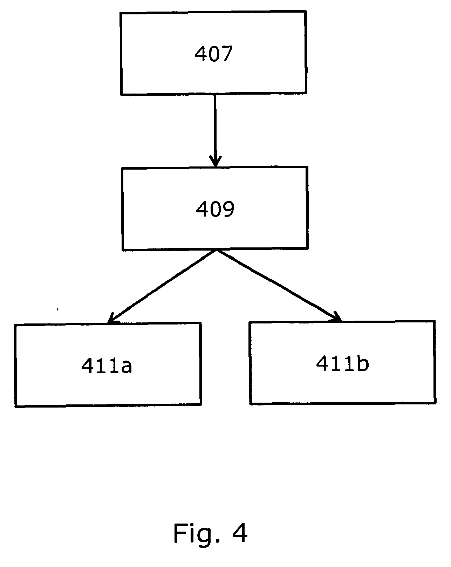

Fig. 4 illustrates the steps for producing the synchronized data packet. In step 407, the incoming data packet signal is split into the first part and the second part. In step 409, the offset frequency signal representing an offset between the bitrate of the incoming data packet signal and the oscillation frequency of the clock signal is obtained. In step 411a/411b, the synchronized data packet signal 202a is provided by altering the phase of the incoming data packet signal using the phase modulator 217, based on the offset frequency signal determined in step 409. This produces the stretching (step 411a) or compression (step 411b), whichever is applicable.

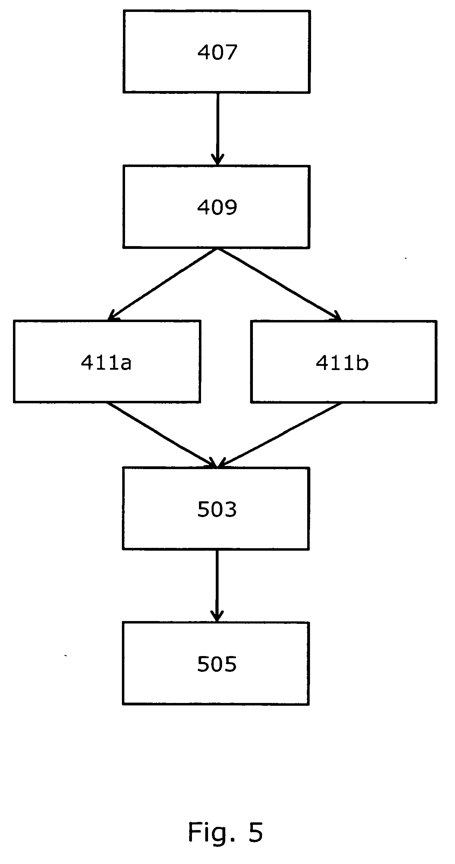

Fig. 5 illustrates schematically a method for converting the incoming data packet signal 102a into a synchronized return-to-zero signal 302a. The method builds on the method described above: A synchronized data packet is produced by splitting the incoming data packet signal into a first part 209 and a second part 211, in step 407. The offset frequency signal 215 representing the offset between the bitrate of the incoming data packet signal and the oscillation frequency of the clock signal is obtained in step 409, and in step 411a/411b, the synchronized data packet signal 202a is stretched or compressed. A train of synchronized, short optical pulses as shown in Fig. 3 (325a-325c) are provided in step 503. In step 505, the data pulses from the synchronized data packet are sampled by the short optical pulses to provide a synchronized return-to-zero signal (302a) with short data pulses.

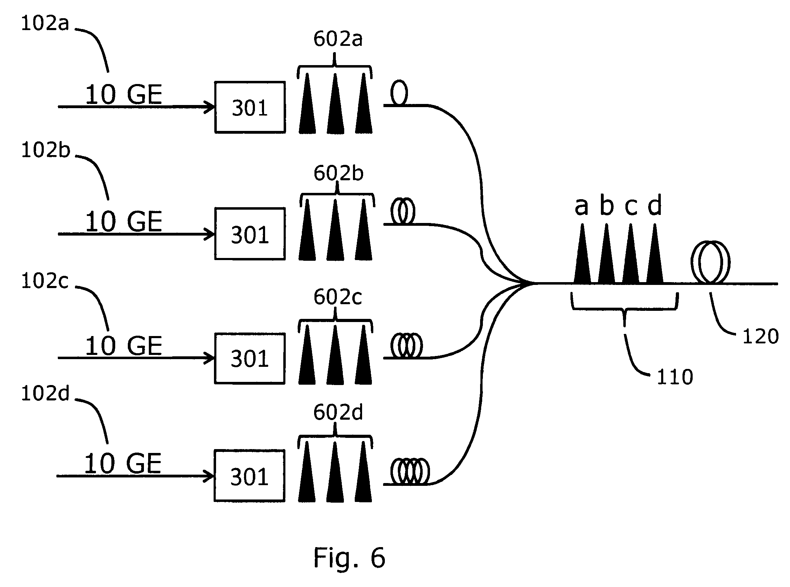

Fig. 6 illustrates a method that prepares incoming line data packet signals for transmission as an optical time division multiplexed return-to-zero signal. Each of the incoming line data packet signals 102a, 102b, 102c, 102d is converted as described above using converters 301, resulting in corresponding synchronized return-to-zero signals 602a, 602b, 602c, 602d. These signals are then delayed with respect to each other, one bit from one signal to the next, and multiplexed as shown. Bit "a" comes from signal 602a, bit "b" comes from signal 602b and so on. The result is that there is no possibility for congestion, since each line data packet signal has its own dedicated slot, where no other packets can disturb it. The resulting OTDM signal 610 is in principle ready for transmission over an optical fiber 120.

It is clear that the sampling pulses 325a, 325b, 325c must fit within the time slots available. In a scenario where ten 10 GE signals are converted to corresponding synchronized return-to-zero signals for transmission in a common OTDM signal, the available time slot is 10 ps. If the number of channels is 100, the available time slot is 1 ps. The pulse source must accordingly be able to produce pulses that can fit well within this time slot, and preferably provide pulses of duration less that 1 ps, such as less than 500 fs. At the same time, the OTDM signal is to be transmitted over some distance, which puts other demands on the shape of the pulses. However, the shorter the distance, the wider the spectral width of the pulses can be. Accordingly, the transmission conditions should be considered when choosing the pulse source. There is no reason to use spectrally very narrow pulses if wider pulses will do just fine, for instance for transmission in a local area environment.

## Claims

1. A synchronizer (201) for synchronizing an incoming data packet signal (102a) to a clock signal (203) having a clock signal oscillation frequency, the incoming data packet signal having a first bitrate, the synchronizer comprising:
• a clock signal generator (205) for generating the clock signal (203);
• an input port (206) for receiving the incoming data packet signal to be converted;
• a splitter (207) for splitting the received incoming data packet signal into a first part (209) and a second part (211), each having identical content as the incoming data packet signal;
• offset frequency determining means (213) for obtaining an offset frequency signal (215) representing an offset between the bitrate of the second part of the incoming data packet signal and the oscillation frequency of the clock signal;
• a phase modulator (217) for providing a synchronized data packet signal (202a) having a bitrate matching the clock signal oscillation frequency, the phase modulator stretching or compressing the first part of the incoming data packet signal based on the obtained offset frequency signal.

2. A synchronizer in accordance with claim 1, wherein the offset frequency determining means uses an electrical or optical phase detector.

3. A converter (301) for converting an incoming data packet signal into a synchronized return-to-zero signal (302a), the converter comprising a synchronizer in accordance with claim 1 or 2, and further comprising:
• a pulse source (323) for providing an optical pulse train comprising light pulses (325a, 325b, 325c) with a pulse rate corresponding to the oscillation frequency of the clock signal;
• an optical sampler (321) for sampling data pulses of the synchronized data packet signal using the optical pulse train, thereby providing the synchronized return-to-zero signal.

4. A method for synchronizing an incoming data packet signal (102a) to a clock signal (203) having a clock signal oscillation frequency, the incoming data packet signal having a first bitrate, the method comprising
• splitting (407) the incoming data packet signal into a first part (209) and a second part (211), each having identical content as the incoming data packet signal;
• obtaining (409) an offset frequency signal (215) representing an offset between a bitrate of the second part of the incoming data packet signal and the oscillation frequency of the clock signal;
• providing a synchronized data packet signal (202a) having a bitrate matching the clock signal oscillation frequency by stretching (415a) or compressing (415b) the first part of the incoming data packet signal based on the obtained offset frequency signal.

5. A method according to claim 4 used for converting an incoming data packet signal (102a) into a synchronized return-to-zero signal (302a), the method comprising synchronizing the incoming data packet signal according to the steps of claim 4 to provide the synchronized data packet signal and further comprises:
• providing (503) an optical pulse train comprising light pulses at a pulse rate corresponding to the oscillation frequency of the clock signal;
• sampling (505) data pulses of the synchronized data packet signal using the optical pulse train, thereby obtaining the synchronized return-to-zero signal (302a).

6. A method in accordance with claim 4 or 5, wherein the stretching or compressing is obtained by:
• determining a temporal duration of an incoming data packet represented by the second part (211) of the incoming data packet signal (102a);
• applying, during said temporal duration, a phase modulation to the corresponding first part (209) of the incoming data packet signal representing the incoming data packet to cause said stretching or compression, the applied phase modulation being based on the obtained offset frequency signal.

7. A method for preparing one or more incoming line data packet signals (102a, 102b, 102c, 102d) for transmission as a time-division multiplexed return-to-zero signal (610), the method comprising:
• converting (601) each of the one or more incoming line data packet signals in accordance with claim 5 to provide corresponding one or more synchronized return-to-zero signals (602a, 602b, 602c, 602d);
• time division multiplexing (603) the one or more synchronized return-to-zero signals, thereby providing the time division multiplexed return-to-zero signal (610).

8. A method in accordance with one of claims 4-7, wherein the phase modulator applies a parabolic phase change to the incoming data packet.

9. A synchronizer in accordance with claim 1 or a converter in accordance with claim 3, wherein the data packet signal represents a frame-based packet signal.

10. A synchronizer in accordance with claim 1 or a converter in accordance with claim 3, wherein the data packet signal is an Ethernet signal.

11. A method in accordance with claims 4-8, wherein the data packet signal represents a frame-based packet signal.

12. A method in accordance with claims 4-8, wherein the data packet signal is an Ethernet signal.

## Patentansprüche

1. Synchronisator (201) zum Synchronisieren eines eingehenden Datenpaketsignals (102a) mit einem Taktsignal (203) mit einer Taktsignal-Oszillationsfrequenz, wobei das eingehende Datenpaketsignal eine erste Bitrate aufweist, wobei der Synchronisator umfasst:
• einen Taktsignalgenerator (205) zum Erzeugen des Taktsignals (203);
• einen Eingangsport (206) zum Empfangen des umzuwandelnden eingehenden Datenpaketsignals;
• eine Weiche (207) zum Trennen des empfangenen eingehenden Datenpaketsignals in einen ersten Teil (209) und einen zweiten Teil (211) mit jeweils demselben Inhalt wie das eingehende Datenpaketsignal;
• Mittel zur Bestimmung einer Offset-Frequenz (213) zum Erhalten eines Offset-Frequenzsignals (215), das ein Offset zwischen der Bitrate des zweiten Teils des eingehenden Datenpaketsignals und der Taktsignal-Oszillationsfrequenz darstellt;
• einen Phasenmodulator (217) zum Bereitstellen eines synchronisierten Datenpaketsignals (202a) mit einer Bitrate, die der Taktsignal-Oszillationsfrequenz gleicht, wobei der Phasenmodulator den ersten Teil des eingehenden Datenpaketsignals auf der Grundlage des erhaltenen Offset-Frequenzsignals dehnt oder komprimiert.

2. Synchronisator nach Anspruch 1, wobei das Mittel zur Bestimmung der Offset-Frequenz einen elektrischen und optischen Phasendetektor nutzt.

3. Konverter (301) zum Umwandeln eines eingehenden Datenpaketsignals in ein synchronisiertes Rückkehr-zu-Null-Signal (302a), wobei der Konverter einen Synchronisator nach Anspruch 1 oder 2 umfasst und weiterhin umfasst:
• eine Impulsquelle (323) zum Bereitstellen einer Folge optischer Impulse, umfassend Lichtimpulse (325a, 325b, 325c) mit einer Impulsrate, die der Taktsignal-Oszillationsfrequenz entspricht;
• einen optischen Abtaster (321) zum Abtasten von Datenimpulsen des synchronisierten Datenpaketsignals unter Verwendung der Folge optischer Impulse, wobei das synchronisierte Rückkehr-zu-Null-Signal bereitgestellt wird.

4. Verfahren zum Synchronisieren eines eingehenden Datenpaketsignals (102a) mit einem Taktsignal (203) mit einer Taktsignal-Oszillationsfrequenz, wobei das eingehende Datenpaketsignal eine erste Bitrate aufweist, wobei das Verfahren umfasst:
• Trennen (407) des empfangenen eingehenden Datenpaketsignals in einen ersten Teil (209) und einen zweiten Teil (211) mit jeweils demselben Inhalt wie das eingehende Datenpaketsignal;
• Erhalten (409) eines Offset-Frequenzsignals (215), das ein Offset zwischen einer Bitrate des zweiten Teils des eingehenden Datenpaketsignals und der Taktsignal-Oszillationsfrequenz darstellt;
• Bereitstellen eines synchronisierten Datenpaketsignals (202a) mit einer Bitrate, die der Taktsignal-Oszillationsfrequenz gleicht, durch Dehnen (415a) oder Komprimieren (415b) des ersten Teils des eingehenden Datenpaketsignals auf der Grundlage des erhaltenen Offset-Frequenzsignals.

5. Verfahren nach Anspruch 4 zur Verwendung beim Umwandeln eines eingehenden Datenpaketsignals (102a) in ein synchronisiertes Rückkehr-zu-Null-Signal (302A), wobei das Verfahren das Synchronisieren des eingehenden Datenpaketsignals gemäß den Schritten in Anspruch 4 zur Bereitstellung des synchronisierten Datenpaketsignals umfasst und weiterhin umfasst:
• Bereitstellen (503) einer Folge optischer Impulse, umfassend Lichtimpulse mit einer Impulsrate, die der Taktsignal-Oszillationsfrequenz entspricht;
• Abtasten (505) von Datenimpulsen des synchronisierten Datenpaketsignals unter Verwendung der Folge optischer Impulse, wobei das synchronisierte Rückkehr-zu-Null-Signal (302a) erhalten wird.

6. Verfahren nach Anspruch 4 oder 5, wobei das Dehnen oder Komprimieren erhalten wird durch:
• Bestimmen einer zeitlichen Dauer eines eingehenden Datenpakets, das den zweiten Teil (211) des eingehenden Datenpaketsignals (102a) darstellt;
• Anlegen einer Phasenmodulation an dem entsprechenden ersten Teil (209) des eingehenden Datenpaketsignals, das das eingehende Datenpaket darstellt, um das Dehnen oder Komprimieren zu verursachen, wobei die angelegte Phasenmodulation auf dem erhaltenen Offset-Frequenzsignal basiert.

7. Verfahren zur Erzeugung eines oder mehrerer eingehender Datenpaketsignale (102a, 102b, 102c, 102d) zur Übertragung als ein Zeitmultiplex-Rückkehr-zu-Null-Signal (610), wobei das Verfahren umfasst:
• Umwandeln (601) jedes des einen oder der mehreren eingehenden Datenpaketsignale gemäß Anspruch 5 zur Bereitstellung entsprechender einer oder mehrerer synchronisierter Rückkehr-zu-Null-Signale (602a, 602b, 602c, 602d);
• Zeitmultiplexen (603) des einen oder der mehreren synchronisierten Rückkehr-zu-Null-Signale, wobei das Zeitmultiplex-Rückkehr-zu-Null-Signal (610) bereitgestellt wird.

8. Verfahren nach einem der Ansprüche 4-7, wobei der Phasenmodulator eine parabolische Phasenänderung am eingehenden Datenpaket angelegt.

9. Synchronisator nach Anspruch 1 oder Konverter nach Anspruch 3, wobei das Datenpaketsignal ein Paketsignal auf Rahmenbasis darstellt.

10. Synchronisator nach Anspruch 1 oder Konverter nach Anspruch 3, wobei das Datenpaketsignal ein Ethernetsignal darstellt.

11. Verfahren nach Anspruch 4-8, wobei das Datenpaketsignal ein Paketsignal auf Rahmenbasis darstellt.

12. Verfahren nach Anspruch 4-8, wobei das Datenpaketsignal ein Ethernetsignal darstellt.

## Revendications

1. Synchroniseur (201) pour synchroniser un signal de paquet de données entrant (102a) avec un signal d'horloge (203) possédant une fréquence d'oscillation de signal d'horloge, le signal de paquet de données entrant possédant un premier débit binaire, le synchroniseur comprenant :
• un générateur de signal d'horloge (205) pour générer le signal d'horloge (203) ;
• un port d'entrée (206) pour recevoir le signal de paquet de données entrant à convertir ;
• un séparateur (207) pour séparer le signal de paquet de données entrant reçu en une première partie (209) et une deuxième partie (211), chacune possédant un contenu identique à celui du signal de paquet de données entrant ;
• un moyen de détermination d'une fréquence décalée (213) pour obtenir un signal de fréquence décalée (215) représentant un décalage entre le débit binaire de la deuxième partie du signal de paquet de données entrant et la fréquence d'oscillation du signal d'horloge ;
• un modulateur de phase (217) pour produire un signal de paquet de données synchronisé (202a) dont le débit binaire correspond à la fréquence d'oscillation du signal d'horloge, le modulateur de phase étendant ou compressant la première partie du signal de paquet de données entrant sur la base du signal de fréquence décalée obtenu.

2. Synchroniseur selon la revendication 1, dans lequel le moyen de détermination d'une fréquence décalée utilise un détecteur de phase électrique ou optique.

3. Convertisseur (301) pour convertir un signal de paquet de données entrant en signal de retour à zéro synchronisé (302a), le convertisseur comprenant un synchroniseur selon la revendication 1 ou 2, et comprenant en outre :
• une source d'impulsions (323) pour produire un train d'impulsions optiques comprenant des impulsions lumineuses (325a, 325b, 325c) à un taux d'impulsions correspondant à la fréquence d'oscillation du signal d'horloge ;
• un échantillonneur optique (321) pour échantillonner des impulsions de données du signal de paquet de données synchronisé en utilisant le train d'impulsions optiques, de manière à produire le signal de retour à zéro synchronisé.

4. Méthode de synchronisation d'un signal de paquet de données entrant (102a) avec un signal d'horloge (203) possédant une fréquence d'oscillation de signal d'horloge, le signal de paquet de données entrant possédant un premier débit binaire, la méthode comprenant :
• la séparation (407) du signal de paquet de données entrant en une première partie (209) et une deuxième partie (211), chacune possédant un contenu identique à celui du signal de paquet de données entrant ;
• l'obtention (409) d'un signal de fréquence décalée (215) représentant un décalage entre un débit binaire de la deuxième partie du signal de paquet de données entrant et la fréquence d'oscillation du signal d'horloge ;
• la production d'un signal de paquet de données synchronisé (202a) dont le débit binaire correspond à la fréquence d'oscillation du signal d'horloge en étendant (415a) ou compressant (415b) la première partie du signal de paquet de données entrant sur la base du signal de fréquence décalée obtenu.

5. Méthode selon la revendication 4 utilisée pour convertir un signal de paquet de données entrant (102a) en signal de retour à zéro synchronisé (302a), la méthode comprenant la synchronisation du signal de paquet de données entrant selon les étapes de la revendication 4 pour produire le signal de paquet de données synchronisé et comprenant en outre :
• la production (503) d'un train d'impulsions optiques comprenant des impulsions lumineuses à un taux d'impulsions correspondant à la fréquence d'oscillation du signal d'horloge ;
• l'échantillonnage (505) d'impulsions de données du signal de paquet de données synchronisé en utilisant le train d'impulsions optiques, de manière à obtenir le signal de retour à zéro synchronisé (302a).

6. Méthode selon la revendication 4 ou 5, dans laquelle l'extension ou la compression est obtenue en :
• déterminant une durée temporelle d'un paquet de données entrant représenté par la deuxième partie (211) du signal de paquet de données entrant (102a) ;
• appliquant, pendant ladite durée temporelle, une modulation de phase à la première partie (209) correspondante du signal de paquet de données entrant représentant le paquet de données entrant afin de provoquer ladite extension ou compression, la modulation de phase appliquée étant basée sur le signal de fréquence décalée obtenu.

7. Méthode de préparation d'un ou plusieurs signaux de paquet de données de ligne entrante (102a, 102b, 102c, 102d) pour les transmettre sous forme de signal de retour à zéro à multiplexage temporel (610), la méthode comprenant :
• la conversion (601) de chacun des signaux de paquet de données de ligne entrante conformément à la revendication 5 pour produire un ou plusieurs signaux de retour à zéro synchronisés (602a, 602b, 602c, 602d) correspondants ;
• le multiplexage temporel (603) des un ou plusieurs signaux de retour à zéro synchronisés, de manière à produire le signal de retour à zéro à multiplexage temporel (610).

8. Méthode selon l'une des revendications 4 à 7, dans laquelle le modulateur de phase applique un changement de phase parabolique au paquet de données entrant.

9. Synchroniseur selon la revendication 1 ou convertisseur selon la revendication 3, dans lequel le signal de paquet de données représente un signal de paquet tramé.

10. Synchroniseur selon la revendication 1 ou convertisseur selon la revendication 3, dans lequel le signal de paquet de données est un signal Ethernet.

11. Méthode selon les revendications 4 à 8, dans laquelle le signal de paquet de données représente un signal de paquet tramé.

12. Méthode selon les revendications 4 à 8, dans laquelle le signal de paquet de données est un signal Ethernet.
